# EUROPÄISCHE PATENTSCHRIFT

(11) **EP 0 967 464 B1**
(45) Veröffentlichungstag und Bekanntmachung des Hinweises auf die Patenterteilung: **28.04.2004**
(21) Anmeldenummer: 99110262.5
(22) Anmeldetag: 27.05.1999
(51) Int. Cl.: G01D 7/02, G01D 7/04, G01D 13/22, G01D 11/28

(54) **Zeigerinstrument**
Pointer instrument
Instrument à aiguille

(30) Priorität: 24.06.1998 DE 19828041
(43) Veröffentlichungstag der Anmeldung: 29.12.1999
(73) Patentinhaber: Siemens Aktiengesellschaft, 80333 München (DE)
(72) Erfinder: Jansa, Frank, 60385 Frankfurt (DE)

(56) Entgegenhaltungen:
- EP-A- 0 536 485
- US-A- 4 170 132
- US-A- 5 546 888
- PATENT ABSTRACTS OF JAPAN vol. 1996, no. 607, 31. Juli 1996 (1996-07-31) & JP 08 062252 A (SUZUKI MOTOR CORP), 8. März 1996 (1996-03-08)

## Beschreibung

Die Erfindung betrifft ein Zeigerinstrument, insbesondere für ein Kraftfahrzeug, mit zwei von jeweils einem Zeigerantrieb auslenkbaren und jeweils eine Zeigerfahne aufweisenden Zeigern, wobei die Zeiger unabhängig voneinander um eine gemeinsame Drehachse verschwenkbar sind.

In modernen Kraftfahrzeugen wird dem Fahrer durch Zeigerinstrumente eine Vielzahl von Informationen signalisiert. Während man sich früher mit lediglich einer Geschwindigkeitsanzeige begnügte, werden heute zunehmend auch Zeigerinstrumente für die Drehzahl, den Füllstand des Kraftstoffs oder die Temperatur vorgesehen. Diese müssen aus Gründen der Verkehrssicherheit im ständigen Blickfeld des Fahrers angeordnet sein, wodurch der zur Verfügung stehende Einbauraum oftmals stark eingegrenzt ist.

Es ist daher bereits vorgeschlagen worden, ähnlich einer Uhr, zwei unabhängige, koaxiale Zeiger in ein Zeigerinstrument zu integrieren, um so den vorhandenen Platz optimal zu nutzen (siehe z.B. JP 08 062252 A). Nachteilig wirkt sich hierbei allerdings aus, dass je nach Stellung der Zeigerfahnen die untere Zeigerfahne von der oberen Zeigerfahne verdeckt sein und daher vom Fahrer nicht unmittelbar abgelesen werden kann. Dadurch kann es bei einem flüchtigen Blick auf das Zeigerinstrument zu Verwechslungen bei der Zuordnung der Zeigerfahne kommen. Weiterhin erfordert die beschriebene Ausführung eine mehrfache Skalierung, so dass zum Ablesen von dem Fahrer eine erhöhte Aufmerksamkeit gefordert ist. Der gegenüber Digitalanzeigen Zeigerinstrumenten eigene Vorteil, dass Veränderungen des angezeigten Wertes erfasst werden können, ohne hierfür die Anzeige exakt ablesen zu müssen, ist daher bei zwei koaxialen Zeigerfahnen nicht mehr gegeben. Ungünstig wirkt sich darüber hinaus der relativ große Abstand des oberen Zeigers von dem Zifferblatt aus, so dass es je nach Betrachtungswinkel zu Ableseungenauigkeiten kommt und das Zeigerinstrument eine große Bauhöhe aufweist. Die genannten Nachteile haben in der Praxis bisher dazu geführt, dass sich Zeigerinstrumente mit mehreren Zeigerfahnen mit Ausnahme des Zeigerinstrumentes für die Uhrzeit nicht durchsetzen konnten.

Der Erfindung liegt das Problem zugrunde, ein Zeigerinstrument der eingangs genannten Art so zu gestalten, dass dessen Ablesegenauigkeit im Vergleich zu herkömmlichen, mit lediglich einer Zeigerfahne ausgestatteten Zeigerinstrumenten im wesentlichen unverändert ist. Dabei sollen insbesondere fehlerhafte Zuordnungen der Zeigerfahne zu der zugehörigen Skalierung ausgeschlossen sein.

Dieses Problem wird erfindungsgemäß dadurch gelöst, dass die Zeigerfahnen im wesentlichen in einer gemeinsamen Ebene und jeweils in einem von einem Kreissektor, dessen Kreismittelpunkt in der Drehachse angeordnet ist, gebildeten Bereich schwenkbar angeordnet sind. Durch die Anordnung der Zeigerfahnen in einer Ebene ist einerseits eine schnelle und fehlerfreie Zuordnung der Zeigerstellung zu der zugehörigen Skalierung und andererseits zugleich eine platzsparende, niedrige Bauweise möglich. Die Zeigerfahnen sind dabei jeweils in einem separaten Kreissektor schwenkbar, so dass Überschneidungen der Zeigerfahnen ausgeschlossen sind. Grundsätzlich ist dabei die Anzahl der so ausgeführten Zeigerfahnen beliebig, wobei in der Praxis aus Gründen der Übersichtlichkeit bis max. vier Zeigerfahnen zu empfehlen sind.

Die gemeinsame Drehachse, um welche die Zeigerfahnen schwenkbar angeordnet sind, kann gegenüber der Ebene eines Zifferblattes im wesentlichen senkrecht ausgerichtet und mit dem Instrumentengehäuse fest verbunden sein. Besonders vorteilhaft ist jedoch eine Ausführungsform der Erfindung, bei der die gemeinsame Achse als Zeigerwelle einer der Zeigerfahnen ausgeführt ist. Die andere bzw. die weiteren Zeigerfahnen sind dabei relativ zu der Zeigerwelle um diese schwenkbar angeordnet. Hierdurch wird eine kompakte Bauform erreicht, die zugleich auch die Möglichkeit bietet, vorhandene Zeigeinstrumente mit zusätzlichen Zeigern zu ergänzen. Die Zeigerfahnen sind dabei unabhängig voneinander schwenkbar angeordnet.

Eine besonders vorteilhafte Ausführungsform der Erfindung ist auch dann gegeben, wenn die Zeigerfahnen mittels eines formschlüssigen Getriebes auslenkbar sind. Hierdurch lässt sich eine exakte und fehlerfreie Übertragung der Stellung des jeweiligen Zeigerantriebsystemes auf die Zeigerwelle bzw. die Zeigerfahne erreichen. Hierbei sind insbesondere Verschiebungen des Nullpunktes aufgrund von Schlupf ausgeschlossen.

Besonders günstig ist hierzu eine Weiterbildung der Erfindung, bei der das Getriebe ein Zahnradgetriebe ist. Dadurch lässt sich mit einfachen Mitteln eine sichere Auslenkung der Zeigerfahne erreichen, wobei zwischen den Zahnrädern des Zahnradgetriebes beliebige Über- bzw. Untersetzungsverhältnisse erreichbar sind. Die Zahnräder können hierbei beispielsweise auch kreissektorförmig mit einem zur Auslenkung der Zeigerfahne erforderlichen Öffnungswinkel ausgeführt sein.

Vorteilhaft ist es dabei auch, wenn das Getriebe mit gegeneinander vorgespannten Zahnrädern ausgestattet ist. Durch diese Vorspannung lässt sich ein die Ablesegenauigkeit störendes Spiel vermeiden. Dadurch wird insbesondere eine Umkehrung der Drehbewegung schneller erkennbar und fehlerfrei dargestellt.

Eine andere, besonders vorteilhafte Weiterbildungsform der Erfindung ist auch dann gegeben, wenn das Getriebe ein Zahnriemengetriebe ist. Hierdurch lässt sich eine zugleich platzsparende und kompakte Bauweise realisieren. Zugleich erfolgt die Kraftübertragung spielfrei, so dass auf ein zusätzliches Spannmittel verzichtet werden kann.

Eine andere, besonders vorteilhafte Ausführungsform der Erfindung ist dadurch gegeben, dass die Zeigerfahnen in zumindest einem Teilbereich transparent ausgeführt sind. Hierdurch lässt sich die Ablesegenauigkeit wesentlich verbessern, da auch von der Zeigerfahne ganz oder teilweise verdeckte Bereiche des Zifferblattes abgelesen werden können.

Vorzugsweise sind die Zeigerfahnen lichtleitend und in zumindest einem Teilbereich lichtauskoppelnd ausgebildet, wodurch eine die Ablesbarkeit des Zeigerinstruments inbesondere bei Umgebungsdunkelheit erheblich verbessernde Beleuchtung der Zeigerfahnen ermöglicht ist. Eine besonders günstige Ausführungsform lässt sich hierbei dadurch erreichen, dass die Zeigerfahnen jeweils mittels eines Lichteinkoppelelements beleuchtbar ausgeführt sind. Die jeweils beleuchtete Zeigerfahne tritt dadurch deutlich sichtbar gegenüber dem Zifferblatt hervor. Hierbei ist es problemlos möglich, die verschiedenen Zeigerfahnen mit unterschiedlichen Farben zu beleuchten, so dass durch den Farbkontrast eine Verwechslung ausgeschlossen ist. Denkbar sind auch Ausführungsformen, bei denen die Beleuchtung der Zeigerfahnen je nach Auslenkungswinkel in der Helligkeit oder der Farbe veränderlich sind und so beispielsweise eine Abweichung von einem Sollwert unmittelbar erkennbar ist.

Man könnte sich vorstellen, das Lichteinkoppelelement als konzentrisch zur Drehachse angeordnete Scheibe auszubilden. Das Element ist jedoch besonders leicht - und damit das von dem Zeigerantrieb aufzubringende Drehmoment vergleichsweise gering - und die Lichtverluste in dem Lichteinkoppelelement sind niedrig, wenn gemäß einer anderen vorteilhaften Weiterbildung der Erfindung das Lichteinkoppelelement im Querschnitt ringsegmentförmig ist, wobei der Kreismittelpunkt des Ringsegments in etwa in der Drehachse angeordnet ist.

Das von einer Lichtquelle in den Zeiger einzustrahlende Licht wird in besonders hohem Mass genutzt, wenn eine Licht in das Lichteinkoppelelement einstrahlende Lichtquelle dem Lichteinkoppelelement gegenüberliegend auf einer Platine des Zeigerinstruments angeordnet ist. Auf diese Weise besitzt das Zeigerinstrument zudem einen sehr kompakten Aufbau.

Eine andere besonders günstige Ausführungsform ist dadurch gegeben, dass die Zeigerfahnen jeweils eine unmittelbar einstrahlende Lichtquelle aufweisen. Hierdurch kann eine jeweils für eine Zeigerfahne erforderliche Lichteinkoppelstelle entfallen und somit die Abmessungen des Zeigerinstrumentes erheblich reduziert werden. Die gemeinsame Schwenkachse kann hierzu beispielsweise mit entsprechenden Schleifkontakten versehen sein, so dass ein einfacher Aufbau ermöglicht wird.

Die Erfindung lässt verschiedene Ausführungsformen zu. Zur weiteren Verdeutlichung ihres Grundprinzips sind drei davon in der Zeichnung dargestellt und werden nachfolgend beschrieben. Diese zeigt in
- Fig. 1: eine seitliche, teilweise geschnittene Darstellung eines erfindungsgemäßen Zeigerinstrumentes,
- Fig. 2: eine seitliche, teilweise geschnittene Darstellung des in Figur 1 dargestellten Zeigerinstrumentes in einer abgewandelten Ausführungsform,
- Fig. 3: eine Draufsicht auf ein Zeigerinstrument nach Fig. 1 oder 2,
- Fig. 4: eine Prinzipdarstellung eines Zeigerantriebsystemes in einer Draufsicht,
- Fig. 5: eine seitliche, teilweise geschnittene Darstellung eines weiteren erfindungsgemäßen Zeigerinstrumentes.

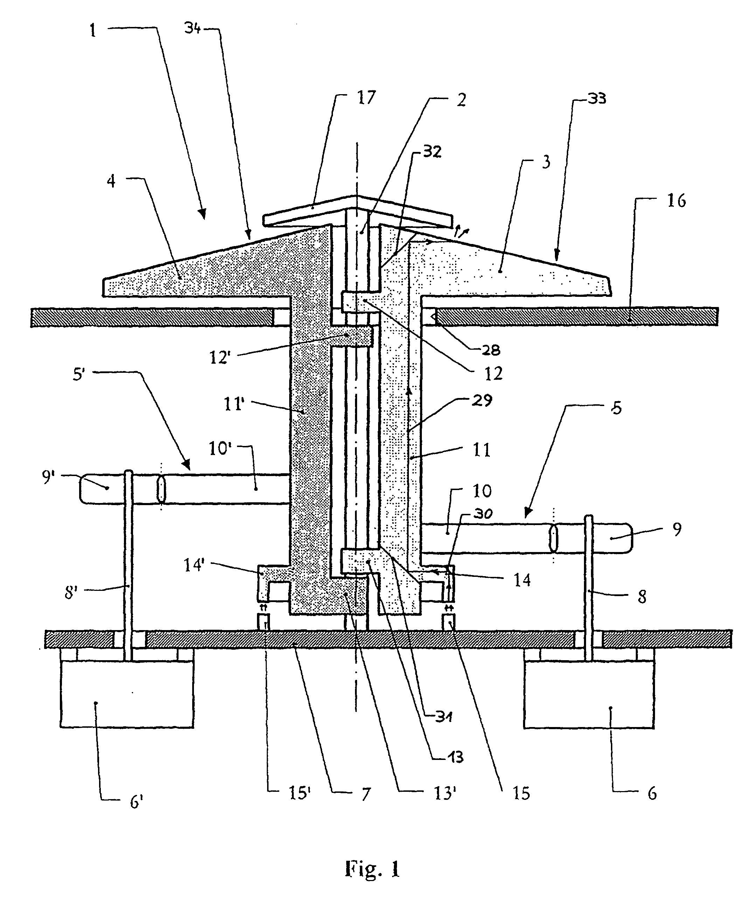

Figur 1 zeigt eine teilweise geschnittene Seitenansicht eines Zeigerinstrumentes 1 mit zwei um eine gemeinsame Achse 2 schwenkbaren Zeigerfahnen 3, 4 von Zeigern 33, 34. Die beiden Zeigerfahnen 3, 4 sind jeweils unabhängig voneinander mittels eines als Zahnradgetriebe ausgeführten Getriebes 5, 5' auslenkbar. Hierzu hat das Zeigerinstrument 1 je einen Zeigerantrieb 6, 6', welcher rückseitig auf einer Platine 7 angeordnet ist und jeweils mittels einer Antriebswelle 8, 8' ein Zahnrad 9, 9' antreibt. Das Zahnrad 9 bzw. 9' greift jeweils in eine kreissektorförmige Zahnscheibe 10, 10' ein, welche mit jeweils einem vertikalen Tragarm 11, 11' für die Zeigerfahnen 3, 4 verbunden ist. Der Tragarm 11, 11' des Zeigers 33 bzw. 34 weist jeweils eine obere Lagerstelle 12, 12' und eine untere Lagerstelle 13, 13' auf, welche die gemeinsame Achse 2 umgreifen und eine Auslenkung der Zeigerfahnen 3, 4 ermöglichen. Der Tragarm 11, 11' ist weiterhin mit einem Lichteinkoppelelement 14, 14' verbunden, welches zum Einleiten von von einer Lichtquelle 15, 15' abgestrahltem Licht in den als Lichtleiter ausgeführten Tragarm 11, 11' und die lichtleitenden und lichtauskoppelnden Zeigerfahnen 3, 4 ausgeführt ist. Ein Lichtpfad 29 von der Lichtquelle 15 in die Zeigerfahne 3 über Umlenkflächen 30, 31, 32 in dem Lichteinkoppelelement 14 und in dem Tragarm 11 ist beispielhaft dargestellt. Das Lichteinkoppelelement 14, 14' ist im Querschnitt ringsegmentförmig, so dass bei einer Verschwenkung des Tragarmes 11, 11' um die Achse 2 das Lichteinkoppelelement 14, 14' in jeder Winkelstellung direkt oberhalb der Lichtquelle 15, 15' positioniert ist.

Die beiden Zeigerfahnen 3, 4 liegen in einer gemeinsamen, zu einem Zifferblatt 16 parallelen Ebene, wobei die Schwenkbereiche der Zeigerfahnen 3, 4 einander nicht überschneiden. Die gemeinsame Achse 2 trägt an ihrem oberen Ende eine Abdeckkappe 17, welche die zentralen Lagerungsbauteile sowie eine von dem Tragarm 11, 11' durchgriffene Ausnehmung in dem Zifferblatt 16 gegenüber einem möglichen Betrachter verdeckt, und ist starr auf der Platine 7 befestigt.

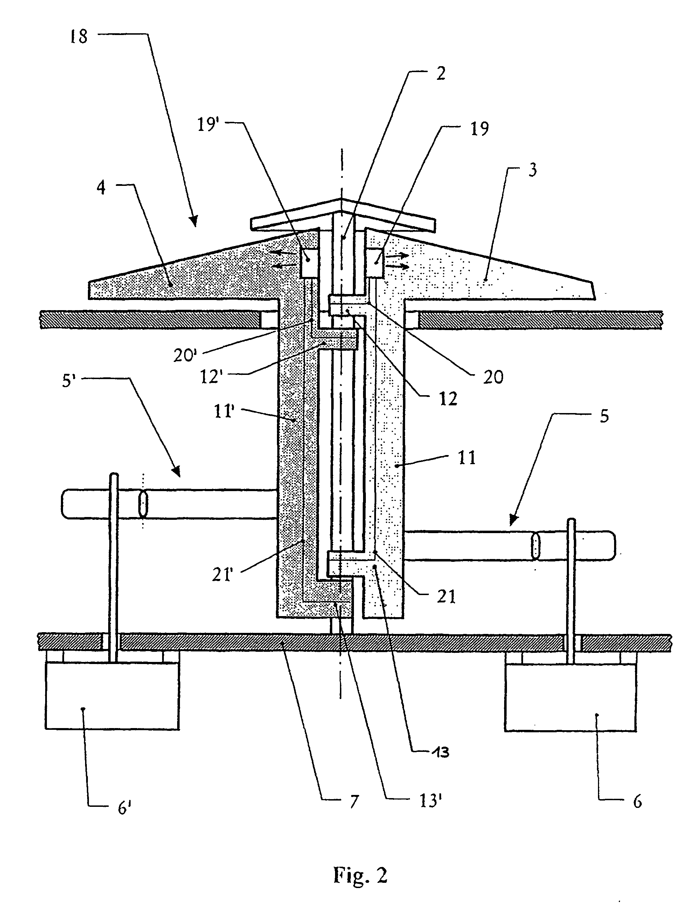

Figur 2 zeigt eine Seitenansicht eines Zeigerinstrumentes 18, welches gegenüber dem in Figur 1 gezeigten Zeigerinstrument 1 lediglich geringfügig abgewandelt ist. Im wesentlichen transparent sowie lichtleitend und lichtauskoppelnd ausgeführte Zeigerfahnen 3, 4 tragen hierbei an ihrem einer gemeinsamen Achse 2 zugewandten Ende jeweils eine von einer LED gebildete Lichtquelle 19, 19', mittels der die Zeigerfahnen 3, 4 direkt und unabhängig voneinander beleuchtbar sind. Die jeweilige Lichtquelle 19, 19' ist hierzu jeweils mit zwei elektrischen Kontaktierungen 20, 21, 20', 21' versehen, welche jeweils im Bereich einer oberen Lagerstelle 12, 12' und einer unteren Lagerstelle 13, 13' mittels eines nicht dargestellten Schleifkontaktes mit einem an der gemeinsamen Achse 2 angebrachten, elektrischen Kontaktmittel verbunden sind. Das Zeigerinstrument 18 besitzt in Übereinstimmung mit dem in Figur 1 dargestellten Zeigerinstrument 1 je einen mit einer Platine 7 verbundenen Zeigerantrieb 6, 6', welcher mittels eines Getriebes 5, 5' einen jeweils eine der Zeigerfahnen 3, 4 aufnehmenden Tragarm 11, 11' auslenkt.

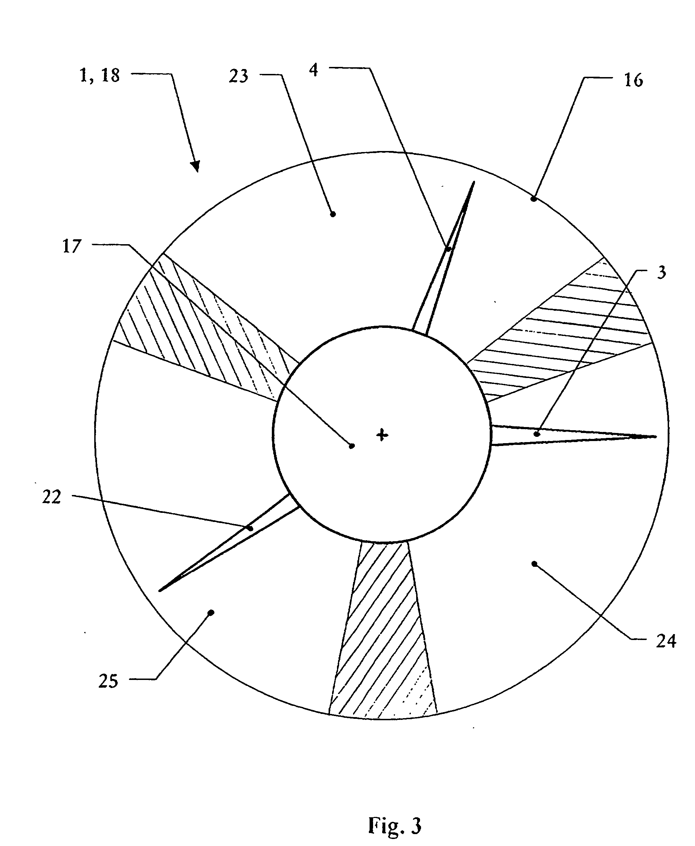

Figur 3 zeigt eine Draufsicht auf ein in den Figuren 1 oder 2 dargestelltes Zeigerinstrument 1 oder 18 aus dem Blickwinkel eines möglichen Betrachters. Zu erkennen ist dabei zusätzlich zu den bereits in den Figuren 1 und 2 dargestellten Zeigerfahnen 3, 4 eine weitere Zeigerfahne 22, welche Zeigerfahnen 3, 4, 22 jeweils in einem Kreissektor 24, 23, 25 mit einem Schwenkwinkel von ca. 100° schwenkbar sind. Das Zifferblatt 16 weist hierzu jeweils getrennte (hier nicht dargestellte) Skalierungen auf, so dass eine Verwechslung ausgeschlossen ist. In der dargestellten Betriebsposition zeigen die von der Abdeckkappe 17 teilweise verdeckten Zeigerfahnen 3, 4, 22 jeweils einen aktuellen Wert an, welcher zur Unterstützung der Ablesegenauigkeit auch mit einer anderen Skalierung oder mit farblich abgesetzten Abschnitten darstellbar ist. Die Schwenkbereiche der einzelnen Zeigerfahnen 3, 4, 22 können hierbei auch unterschiedlich groß sein, so dass beispielsweise der Schwenkbereich einer ersten Zeigerfahne 180° und derjenige der beiden übrigen Zeigerfahnen lediglich je 90° einschließt.

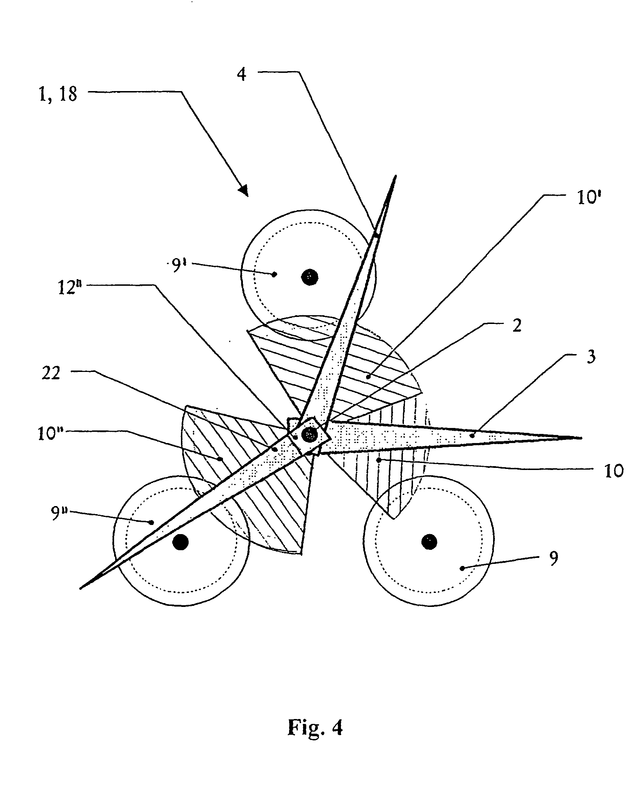

Ebenfalls in einer Draufsicht zeigt Figur 4 eine Prinzipdarstellung des Antriebes der Zeigerinstrumente 1 bzw. 18. Hierbei ist auf eine Darstellung des Zifferblattes verzichtet worden, so dass der Blick auf die darunter befindlichen Bauteile freiliegt. Zu erkennen ist die jeweils mit einer Zeigerfahne 3, 4 und 22 verbundene Zahnscheibe 10, 10', 10'', in die jeweils ein mit einem nicht dargestellten Zeigerantrieb verbundenes Zahnrad 9, 9', 9'' eingreift. Die jeweilige Zahnscheibe 10, 10', 10'' der Zeigerfahnen 3, 4 und 22 ist dabei in unterschiedlichen Ebenen angeordnet, so dass sich deren Schwenkbereiche teilweise überschneiden können. Die mit der jeweiligen Zeigerfahne 3, 4, 22 verbundene obere Lagerstelle, von welchen Lagerstellen hier nur die der Zeigerfahne 22 zugeordnete Lagerstelle 12'' erkennbar ist, umgreift die gemeinsame Achse 2 hierzu ebenfalls in unterschiedlichen Ebenen.

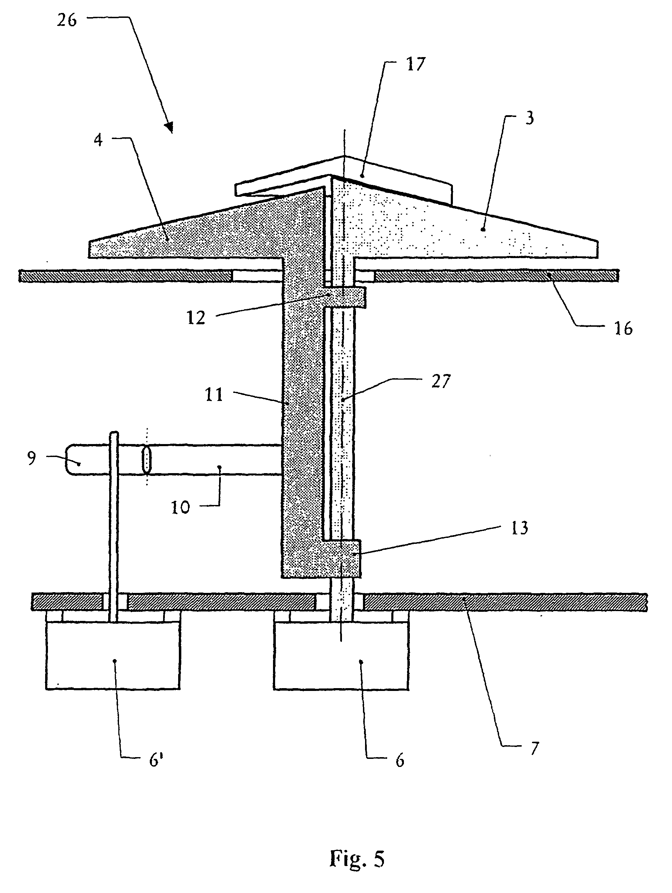

Eine weitere Ausführungsform eines erfindungsgemäßen Zeigerinstrumentes 26 zeigt Figur 5 in einer seitlichen, teilweise geschnittenen Darstellung. Hierbei umgreifen eine mit einem Tragarm 11 einer Zeigerfahne 4 verbundene obere Lagerstelle 12 und eine untere Lagerstelle 13 eine eine Zeigerfahne 3 auslenkende Zeigerwelle 27, so dass die Zeigerwelle 27 und der Tragarm 11 relativ zueinander schwenkbar sind. Die Zeigerwelle 27 ist hierzu unmittelbar mit einem Zeigerantrieb 6, welcher auf der Unterseite einer Platine 7 angeordnet ist, verbunden. Die zu der Zeigerfahne 3 unabhängig schwenkbare Zeigerfahne 4 ist mit einer Zahnscheibe 10 verbunden, in die ein Zahnrad 9 eingreift, welches seinerseits mittels eines Zeigerantriebes 6' auslenkbar ist. Die beiden Zeigerfahnen 3, 4 sind in einer gemeinsamen Ebene vor einem Zifferblatt 16 schwenkbar. Die Zeigerfahne 4 trägt eine Abdeckkappe 17, so dass der Blick auf die darunter liegenden Bauteile versperrt ist. Auch diese Ausführungsform kann mit einer nicht dargestellten Lichtquelle oder einer Lichteinkoppelstelle zur Beleuchtung ausgestattet sein.

Weitere Ausführungsformen mit mehr als drei Zeigerfahnen sind ebenfalls darstellbar, wobei deren Anzahl aus Gründen der Übersichtlichkeit nicht über vier hinausgehen sollte. Ebenfalls sind unterschiedlich große oder ausgestaltete, beispielsweise gekröpfte, Zeigerfahnen ebenso möglich wie getrennt angeordnete und gegenüber der Ebene der Zeigerfahnen geneigte Zifferblätter.

## Patentansprüche

1. Zeigerinstrument, insbesondere für ein Kraftfahrzeug, mit zwei von jeweils einem Zeigerantrieb auslenkbaren und jeweils eine Zeigerfahne aufweisenden Zeigern, wobei die Zeiger unabhängig voneinander um eine gemeinsame Drehachse verschwenkbar sind, **dadurch gekennzeichnet, dass** die Zeigerfahnen (3, 4, 22) im wesentlichen in einer gemeinsamen Ebene und jeweils in einem von einem Kreissektor (24, 23, 25), dessen Kreismittelpunkt in der Drehachse (2) angeordnet ist, gebildeten Bereich schwenkbar angeordnet sind.

2. Zeigerinstrument nach Anspruch 1, **dadurch gekennzeichnet, dass** die gemeinsame Achse (2) als Zeigerwelle (27) einer der Zeigerfahnen (4) ausgeführt ist.

3. Zeigerinstrument nach Anspruch 1 oder 2, **dadurch gekennzeichnet, dass** die Zeigerfahnen (3, 4, 22) mittels eines formschlüssigen Getriebes (5, 5') auslenkbar sind.

4. Zeigerinstrument nach Anspruch 3, **dadurch gekennzeichnet, dass** das Getriebe (5, 5') ein Zahnradgetriebe ist.

5. Zeigerinstrument nach Anspruch 3 oder 4, **dadurch gekennzeichnet, dass** das Getriebe (5, 5') mit gegeneinander vorgespannten Zahnrädern (9, 9', Zahnscheiben 10, 10') ausgestattet ist.

6. Zeigerinstrument nach Anspruch 3, **dadurch gekennzeichnet, dass** das Getriebe ein Zahnriemengetriebe ist.

7. Zeigerinstrument nach einem der vorhergehenden Ansprüche, **dadurch gekennzeichnet, dass** die Zeigerfahnen (3, 4, 22) in zumindest einem Teilbereich transparent ausgeführt sind.

8. Zeigerinstrument nach einem der vorhergehenden Ansprüche, **dadurch gekennzeichnet, dass** die Zeigerfahnen (3, 4) jeweils mittels eines Lichteinkoppelelements (14, 14') beleuchtbar ausgeführt sind.

9. Zeigerinstrument nach Anspruch 8, **dadurch gekennzeichnet, dass** das Lichteinkoppelelement (14, 14') im Querschnitt ringsegmentförmig ist, wobei der Kreismittelpunkt des Ringsegments in etwa in der Drehachse (2) angeordnet ist.

10. Zeigerinstrument nach Anspruch 8 oder 9, **dadurch gekennzeichnet, dass** eine Licht in das Lichteinkoppelelement (14, 14') einstrahlende Lichtquelle (15, 15') dem Lichteinkoppelelement (14, 14') gegenüberliegend auf einer Platine (7) des Zeigerinstruments (1) angeordnet ist.

11. Zeigerinstrument nach einem der vorhergehenden Ansprüche, **dadurch gekennzeichnet, dass** die Zeigerfahnen (3, 4) jeweils eine unmittelbar einstrahlende Lichtquelle (19, 19') aufweisen.

## Claims

1. Pointer instrument, especially one for a motor vehicle, having two pointers which can be deflected by a pointer drive and each have a pointer flag, it being possible for the pointers to pivot independently of each other about a common axis of rotation, **characterized in that** the pointer flags (3, 4, 22) are essentially arranged in a common plane and in each case so that they can pivot in a region which is formed by a sector of a circle (24, 23, 25) whose centre is arranged on the axis of rotation (2).

2. Pointer instrument according to Claim 1, **characterized in that** the common axis (2) is designed as the pointer shaft (27) of one of the pointer flags (4).

3. Pointer instrument according to Claim 1 or 2, **characterized in that** the pointer flags (3, 4, 22) can be deflected by means of a form-fitting mechanism (5, 5').

4. Pointer instrument according to Claim 3, **characterized in that** the mechanism (5, 5') is a gear mechanism.

5. Pointer instrument according to Claim 3 or 4, **characterized in that** the mechanism (5, 5') is equipped with gearwheels (9, 9', toothed discs 10, 10') that are prestressed towards one another.

6. Pointer instrument according to Claim 3, **characterized in that** the mechanism is a toothed-belt mechanism.

7. Pointer instrument according to one of the preceding claims, **characterized in that** the pointer flags (3, 4, 22) are designed to be transparent in at least one sub-area.

8. Pointer instrument according to one of the preceding claims, **characterized in that** the pointer flags (3, 4) are each designed to be illuminated by means of a light light-injection element (14, 14').

9. Pointer instrument according to Claim 8, **characterized in that** the light light-injection element (14, 14') has a cross section in the form of an annular segment, the centre of the annular segment being arranged approximately on the axis of rotation (2).

10. Pointer instrument according to Claim 8 or 9, **characterized in that** a light source (15, 15') radiating light into the light light-injection element (14, 14') is arranged opposite the light light-injection element (14, 14') on a circuit board (7) belonging to the pointer instrument (1).

11. Pointer instrument according to one of the preceding claims, **characterized in that** the pointer flags (3, 4) each have a light source (19, 19') radiating in directly.

## Revendications

1. Instrument à aiguilles, en particulier pour un véhicule automobile, pourvu de deux aiguilles pouvant être déviées par respectivement un entraînement d'aiguille et présentant chacune un curseur d'aiguille, les aiguilles pouvant être basculées indépendamment l'une de l'autre autour d'un axe de rotation commun, **caractérisé en ce que** les curseurs d'aiguilles (3, 4, 22) sont disposés de façon pivotante sensiblement dans un plan commun et respectivement dans une zone formée par un secteur circulaire (24, 23, 25), dont le centre est disposé dans l'axe de rotation (2).

2. Instrument à aiguilles selon la revendication 1, **caractérisé en ce que** l'axe (2) commun est réalisé comme un arbre d'aiguille (27) de l'un des curseurs d'aiguille (4).

3. Instrument à aiguilles selon la revendication 1 ou 2, **caractérisé en ce que** les curseurs d'aiguille (3, 4, 22) peuvent être déviés au moyen d'un engrenage (5, 5') complémentaire au niveau de la forme.

4. Instrument à aiguilles selon la revendication 3, **caractérisé en ce que** l'engrenage (5, 5') est un engrenage à roue dentée.

5. Instrument à aiguilles selon la revendication 3 ou 4, **caractérisé en ce que** l'engrenage (5, 5') est équipé de roues dentées (9, 9', disques dentés 10, 10') précontraintes l'une contre l'autre.

6. Instrument à aiguilles selon la revendication 3, **caractérisé en ce que** l'engrenage est un engrenage à courroie dentée.

7. Instrument à aiguilles selon l'une quelconque des revendications précédentes, **caractérisé en ce que** les curseurs d'aiguille (3,4, 22) sont réalisés de façon transparente dans au moins une zone partielle.

8. Instrument à aiguilles selon l'une quelconque des revendications précédentes, **caractérisé en ce que** les curseurs d'aiguille (3, 4) sont réalisés de façon à pouvoir être éclairés respectivement au moyen d'un élément de couplage de lumière (14, 14').

9. Instrument à aiguilles selon la revendication 8, **caractérisé en ce que** l'élément de couplage de lumière (14, 14') a une forme de segment annulaire vu en coupe, le centre du segment annulaire étant disposé à peu près dans l'axe de rotation (2).

10. Instrument à aiguilles selon la revendication 8 ou 9, **caractérisé en ce qu'**une source de lumière (15, 15') envoyant de la lumière dans l'élément de couplage de lumière (14, 14') est disposée en face dudit élément de couplage de lumière (14, 14') sur une platine (7) de l'instrument à aiguilles (1).

11. Instrument à aiguilles selon l'une quelconque des revendications précédentes, **caractérisé en ce que** les curseurs d'aiguille (3, 4) présentent respectivement une source lumineuse (19, 19') à incidence directe.
